(19) **Europäisches Patentamt European Patent Office Office européen des brevets**

(11) **EP 4 659 997 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
**B60L 58/12** (2019.01)     **G01C 21/34** (2006.01)
**B60L 3/12** (2006.01)

(21) Application number: **24830218.4**

(22) Date of filing: **14.05.2024**

(86) International application number:
**PCT/CN2024/093148**

(87) International publication number:
**WO 2025/001570 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.06.2023 CN 202310771113**

(71) Applicant: **Chery Automobile Co., Ltd.**
**Wuhu, Anhui 241006 (CN)**

(72) Inventors:
• **ZHANG, Xiaopeng**
  **Wuhu, Anhui 241006 (CN)**
• **WANG, Chuansu**
  **Wuhu, Anhui 241006 (CN)**
• **LI, Dong**
  **Wuhu, Anhui 241006 (CN)**
• **XU, Peiling**
  **Wuhu, Anhui 241006 (CN)**

(74) Representative: **Yang, Shu**
**Withers & Rogers LLP**
**2 London Bridge**
**London SE1 9RA (GB)**

(54) **METHOD FOR DETERMINING ENERGY REPLENISHMENT MODE, DEVICE, AND STORAGE MEDIUM**

(57) Embodiments of the present invention relate to the technical field of computers. Disclosed are a method for determining energy replenishment means, a device, and a storage medium. In the solution, a vehicle-mounted terminal can send state information of a plurality of in-vehicle electric devices and the number of passengers to a big data platform, and on the basis of these pieces of information, the big data platform calculates charging amount of electricity (i.e., target charging amount of electricity) required for a target vehicle to reach a destination, further determines a plurality of energy replenishment modes on the basis of the remaining amount of electricity and the charging amount of electricity, and marks a corresponding charging pile combination and charging time. In this way, by means of the method for automatically determining the energy replenishment mode, a user can know energy replenishment modes under different paths without planning an energy replenishment mode by himself/herself; furthermore, the user can perform energy replenishment to the vehicle on the basis of the selected path and the corresponding energy replenishment mode to reach the destination, and convenience is achieved.

FIG. 4

## Description

This disclosure claims priority to Chinese Patent Application No. 202310771113.0, titled "METHOD FOR DETERMINING ENERGY REPLENISHMENT MODE, DEVICE, AND STORAGE MEDIUM" and filed on June 26, 2023, the entire contents of which are incorporated herein by reference.

## TECHNICAL FIELD

The present disclosure relates to the field of new energy vehicle technologies, and specifically relates to a method, device, and storage medium for determining energy replenishment means.

## BACKGROUND

With the development of new energy vehicle technologies, market recognition of new energy vehicles has become increasingly higher, and market share has gradually increased. For electric vehicles, range has always been a concern for users. Generally, users can independently determine charging time and location by viewing the power displayed on the dashboard or the display screen of an on-board terminal, as well as the location of charging stations on electronic maps.

However, during long journeys, it is difficult for users to plan a complete charging strategy, which may cause vehicles to break down due to insufficient power, bringing great inconvenience to users.

## SUMMARY

The present disclosure provides a method, device, and storage medium for determining energy replenishment means, which can solve problems in related technologies. The technical solution is as follows.

In a first aspect, a method for determining energy replenishment means is provided, and the method includes:

transmitting, by an on-board terminal, a route acquisition request to a map platform in a case that an input operation for a destination of a user is detected, wherein the route acquisition request includes identification information of a target vehicle;

acquiring, by the on-board terminal, status information of a plurality of in-vehicle electrical devices and a number of passengers, and transmitting an energy replenishment recommendation request to a big data platform, wherein the status information is a start state or a non-start state, and the energy replenishment recommendation request includes the identification information of the target vehicle and the status information of the plurality of in-vehicle electrical devices;

determining, by the map platform, a plurality of routes between a location of the target vehicle and the destination, and transmitting, by the map platform, the plurality of routes to the big data platform and the on-board terminal;

determining, by the big data platform, in-vehicle electrical devices whose status information is the start state as target in-vehicle electrical devices in a case that status information of at least one in-vehicle electrical device among the status information of the plurality of in-vehicle electrical devices is the start state, and determining, by the big data platform, rated power of the target in-vehicle electrical devices based on a correspondence relationship between vehicle identification information and rated power of in-vehicle electrical devices, and the identification information of the target vehicle;

determining, by the big data platform, a total weight of the target vehicle based on the number of passengers and the identification information of the target vehicle, summing, by the big data platform, the rated power of the target in-vehicle electrical devices to obtain a total power value, and determining, by the big data platform, a drivable distance of the target vehicle under remaining battery charge based on the remaining battery charge, the total weight, the total power value, and an expected speed of the target vehicle, wherein the remaining battery charge and the expected speed of the target vehicle are acquired by the big data platform from a telematics platform;

determining, by the big data platform, a target driving distance corresponding to each route based on the drivable distance and a route length corresponding to each route;

determining, by the big data platform, first energy consumption consumed by the target in-vehicle electrical devices corresponding to each route based on the target driving distance corresponding to each route, the expected speed of the target vehicle, and the total power value, determining, by the big data platform, second energy consumption consumed by driving of the target vehicle corresponding to each route based on the target driving distance corresponding to each route, the number of passengers, and the identification information of the target vehicle, and summing, by the big data platform, the first energy consumption and the second energy consumption to obtain a target recharge quantity required by the target vehicle corresponding to each route;

inputting, by the big data platform, the remaining battery charge, the target recharge quantity corresponding to each route, charging power of a plurality of charging piles in each route, an interval distance between the plurality of charging piles in each route, and rated battery capacity of the target vehicle into an energy replenishment recommendation algorithm, to determine a charging pile combination corresponding to each route and charging time corresponding to each charging pile in the charging pile combination, wherein the rated battery capacity is battery capacity when the target vehicle is fully charged;

transmitting, by the big data platform, the charging pile combination corresponding to each route and the charging time corresponding to each charging pile in the charging pile combination to the on-board terminal; and

displaying, by the on-board terminal, the plurality of routes, and annotating the charging pile combination corresponding to each route and the charging time corresponding to each charging pile in the charging pile combination.

In a possible implementation, the acquiring, by the on-board terminal, status information of the plurality of in-vehicle electrical devices and the number of passengers includes:

acquiring, by the on-board terminal, status information of a plurality of in-vehicle electrical devices and the number of passengers input by a user.

In a possible implementation, the acquiring, by the on-board terminal, status information of the plurality of in-vehicle electrical devices includes:

detecting, by the on-board terminal, status information of a plurality of in-vehicle electrical devices according to a designated period.

In a possible implementation, the determining, by the big data platform, a total weight of the target vehicle based on the number of passengers and the identification information of the target vehicle, summing, by the big data platform, the rated power of the target in-vehicle electrical devices to obtain a total power value, and determining, by the big data platform, a drivable distance of the target vehicle under remaining battery charge based on the remaining battery charge, the total weight, the total power value, and an expected speed of the target vehicle includes:

determining the drivable distance based on a following formula:

$$G = (n \times m_1 + m_2) \times g \quad (1)$$

$$P = P_1 + P_2 + \cdots \ldots P_n \quad (2)$$

$$S = \frac{W}{G \cdot k + \frac{P}{v}} \quad (3)$$

where G is the total weight of the target vehicle, n is the number of passengers, $m_1$ is a standard body weight, $m_2$ is a mass of the target vehicle, P is the total power value of the target in-vehicle electrical devices, $P_n$ is a power value of any target in-vehicle electrical device, S is the drivable distance, W is the remaining battery charge, k is a friction coefficient, and v is the expected speed of the target vehicle.

In a possible implementation, the determining, by the big data platform, a target driving distance corresponding to each route based on the drivable distance and a route length corresponding to each route includes:
determining the target driving distance corresponding to each route by subtracting the drivable distance from the route length corresponding to each route and adding a preserved buffer distance.

In a possible implementation, the determining, by the big data platform, first energy consumption consumed by the target in-vehicle electrical devices corresponding to each route based on the target driving distance corresponding to each route, the expected speed of the target vehicle, and the total power value, determining, by the big data platform, second energy consumption consumed by driving of the target vehicle corresponding to each route based on the target driving distance corresponding to each route, the number of passengers, and the identification information of the target vehicle, and summing, by the big data platform, the first energy consumption and the second energy consumption to obtain a target recharge quantity required by the target vehicle corresponding to each route includes:

determining the target recharge quantity required by the target vehicle corresponding to each route based on following formulas:

$$W_1 = P \cdot \frac{S_1}{v} \qquad (4)$$

$$W_2 = G \cdot k \cdot S_1 \qquad (5)$$

$$W_3 = W_1 + W_2 \qquad (6)$$

where $W_1$ is the first energy consumption, P is the total power value of the target in-vehicle electrical devices, $S_1$ is the target driving distance, v is the expected speed of the target vehicle, $W_2$ is the second energy consumption, G is the total weight of the target vehicle, k is a friction coefficient, and $W_3$ is the target recharge quantity.

In a possible implementation, the inputting, by the big data platform, the remaining battery charge, the target recharge quantity corresponding to each route, charging power of a plurality of charging piles in each route, an interval distance between the plurality of charging piles in each route, and rated battery capacity of the target vehicle into an energy replenishment recommendation algorithm, to determine a charging pile combination corresponding to each route and charging time corresponding to each charging pile in the charging pile combination includes:

    performing permutation and combination on the plurality of charging piles in each route to obtain a plurality of basic charging pile combinations corresponding to each route;
    determining charging time corresponding to each charging pile in each basic charging pile combination based on charging power of charging piles in each basic charging pile combination and the target recharge quantity corresponding to each route;
    filtering the plurality of basic charging pile combinations corresponding to each route based on the remaining battery charge, the charging power of charging piles in each basic charging pile combination, the charging time corresponding to each charging pile in each basic charging pile combination, the interval distance between the plurality of charging piles in each basic charging pile combination, and the rated battery capacity of the target vehicle, to obtain feasible charging pile combinations corresponding to each route; and
    determining a charging pile combination with shortest charging time among the feasible charging pile combinations corresponding to each route as the charging pile combination corresponding to each route.

In a possible implementation, the method further includes:

    determining, by the big data platform, whether the target vehicle supports a battery swap function based on the identification information of the target vehicle, and in a case that the target vehicle supports the battery swap function: determining, by the big data platform, the total weight of the target vehicle based on the number of passengers and the identification information of the target vehicle, summing by the big data platform, the rated power of the target in-vehicle electrical devices to obtain the total power value of target in-vehicle electrical devices whose status information is the start state, and determining, by the big data platform, the drivable distance of the target vehicle under the remaining battery charge based on the remaining battery charge, the total weight, the total power value, and the expected speed of the target vehicle;
    transmitting, by the big data platform, a plurality of battery swap stations within the drivable distance in each route to the on-board terminal; and
    displaying, by the on-board terminal, the plurality of routes, and annotating, by the on-board terminal, the plurality of battery swap stations within the drivable distance in each route.

In a second aspect, a computer device is provided, including a memory and a processor. The memory is configured to store computer instructions. The processor is configured to execute the computer instructions stored in the memory, to cause the computer device to perform the method according to the first aspect or any possible implementation of the first aspect.

In a third aspect, a computer-readable storage medium is provided, storing computer program code. In response to the computer program code being executed by a computer device, the computer device performs the method according to the first aspect or any possible implementation of the first aspect.

In a fourth aspect, a computer program product is provided, including computer program code. In response to the computer program code being executed by a computer device, the computer device performs the method according to the first aspect or any possible implementation of the first aspect.

The technical solutions provided by the embodiments of the present disclosure may include the following beneficial effects.

Through the solution provided by the embodiments of the present disclosure, the on-board terminal can transmit status information of multiple in-vehicle electrical devices and passenger count to the big data platform. The big data platform calculates the charging power required for the target vehicle to reach the destination (i.e., target recharge quantity) based on this information. Further, based on the remaining power and charging power, multiple energy replenishment methods are determined, and corresponding charging pile combinations and charging times are annotated. In this way, through the method of automatically determining the energy replenishment method, users can understand the energy replenishment methods under different routes without planning by themselves. Further, users can replenish the vehicle according to the selected route and corresponding energy replenishment method to reach the destination, which is relatively convenient.

**BRIEF DESCRIPTION OF THE DRAWINGS**

To illustrate the technical solutions in the embodiments of the present disclosure more clearly, the drawings required for describing the embodiments will be briefly introduced below. Obviously, the drawings in the following description are merely some embodiments of the present disclosure. For those skilled in the art, other drawings may be obtained based on these drawings without creative efforts.

FIG. 1 is a schematic structural diagram of an energy replenishment recommendation system according to an embodiment of the present disclosure;

FIG. 2 is a schematic structural diagram of a terminal according to an embodiment of the present disclosure;

FIG. 3 is a schematic structural diagram of a server according to an embodiment of the present disclosure;

FIG. 4 is a schematic flowchart of a method for determining energy replenishment means according to an embodiment of the present disclosure;

FIG. 5 is a schematic diagram illustrating determination of a target driving distance according to an embodiment of the present disclosure;

FIG. 6 is another schematic diagram illustrating determination of a target driving distance according to an embodiment of the present disclosure; and

FIG. 7 is a schematic structural diagram of an electronic device according to an embodiment of the present disclosure.

**DETAILED DESCRIPTION**

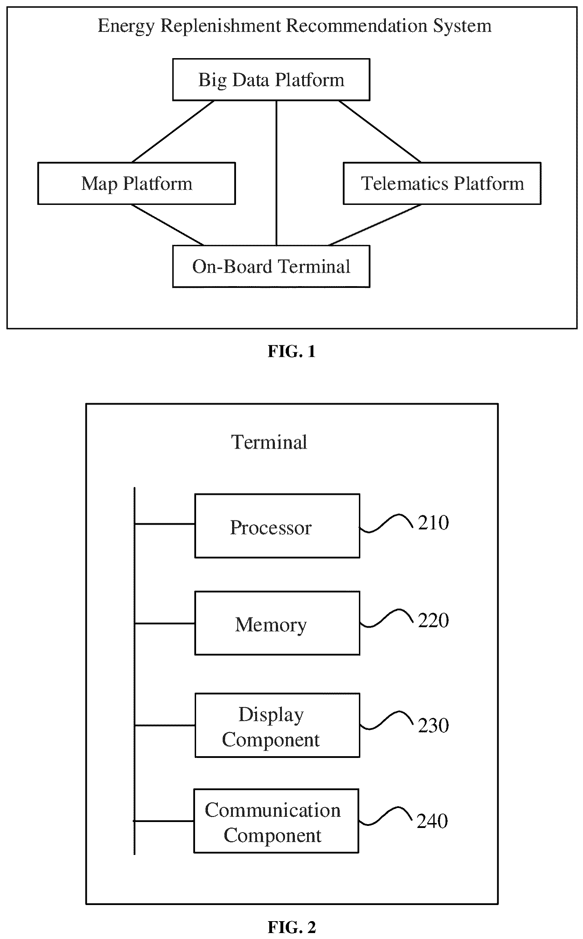

The embodiments of the present disclosure provide a method for determining energy replenishment means, which is used to recommend corresponding energy replenishment methods for a user's travel route when driving. This method can be implemented by an energy replenishment recommendation system, which may include an on-board terminal, a big data platform, a telematics platform, a map platform, etc., as shown in FIG. 1. The big data platform, telematics platform, and map platform may be backend servers of related applications. The big data platform is configured to acquire relevant data from the telematics platform and map platform to determine corresponding energy replenishment methods for vehicles. The telematics platform is configured to record driving data of related vehicles, such as speed, remaining battery charge, etc. The map platform is configured to determine a vehicle's location and provide multiple routes to destinations.

From a hardware perspective, the structure of the on-board terminal can be as shown in FIG. 2, including a processor 210, a memory 220, a display component 230, and a communication component 240.

The processor 210 may be a CPU (Central Processing Unit) or SoC (System on Chip), etc. The processor 210 may be configured to execute various instructions related to the method.

The memory 220 may include various volatile or non-volatile memories, such as SSD (Solid State Disk), DRAM (Dynamic Random Access Memory), etc. The memory 220 may be configured to store pre-stored data, intermediate data, and result data during the energy replenishment method determination process.

The display component 230 may be an independent screen, a screen integrated with the terminal body, a projector, etc. The screen may be a touch screen or a non-touch screen. The display component is used for operation interfaces, such as display interfaces for target routes.

The communication component 240 may be a wired network connector, WiFi (Wireless Fidelity) module, Bluetooth module, cellular network communication module, etc. The communication component 240 may be configured for data transmission with other devices, which may be servers or other terminals.

In addition to the processor and memory, the on-board terminal may also include audio acquisition components and audio output components.

The audio acquisition component may be a microphone, configured to acquire a user's voice. The audio output component may be speakers, earphones, etc., configured to play audio.

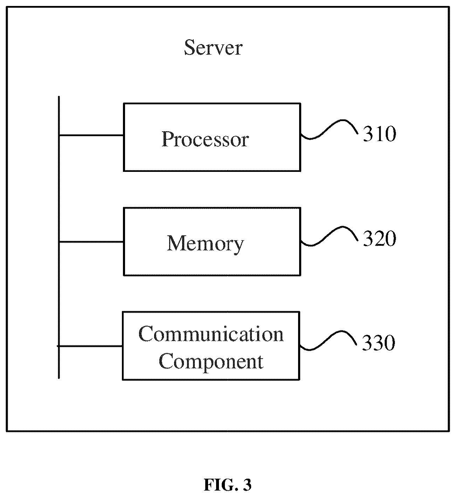

From a hardware perspective, the structure of the server can be as shown in FIG. 3, including a processor 310, a memory 320, and a communication component 330.

The processor 310 may be a CPU or SoC, etc. The processor 310 may be configured to execute various instructions related to the method.

The memory 320 may include various volatile or non-volatile memories, such as SSD, DRAM, etc. The memory 320 may be configured to store pre-stored data, intermediate data, and result data during the energy replenishment method determination process, for example, multiple correspondence relationships.

The communication component 330 may be a wired network connector, WiFi module, Bluetooth module, cellular network communication module, etc. The communication component 330 may be configured for data transmission with other devices, which may be servers or other terminals.

In the field of new energy vehicle technologies, especially for electric vehicles, range issues have persistently troubled users. Therefore, when people choose self-driving trips, they can input the destination name in the on-board terminal, select routes to the destination, and determine whether there are energy replenishment stations along the selected routes, such as battery swap stations, charging stations, etc.

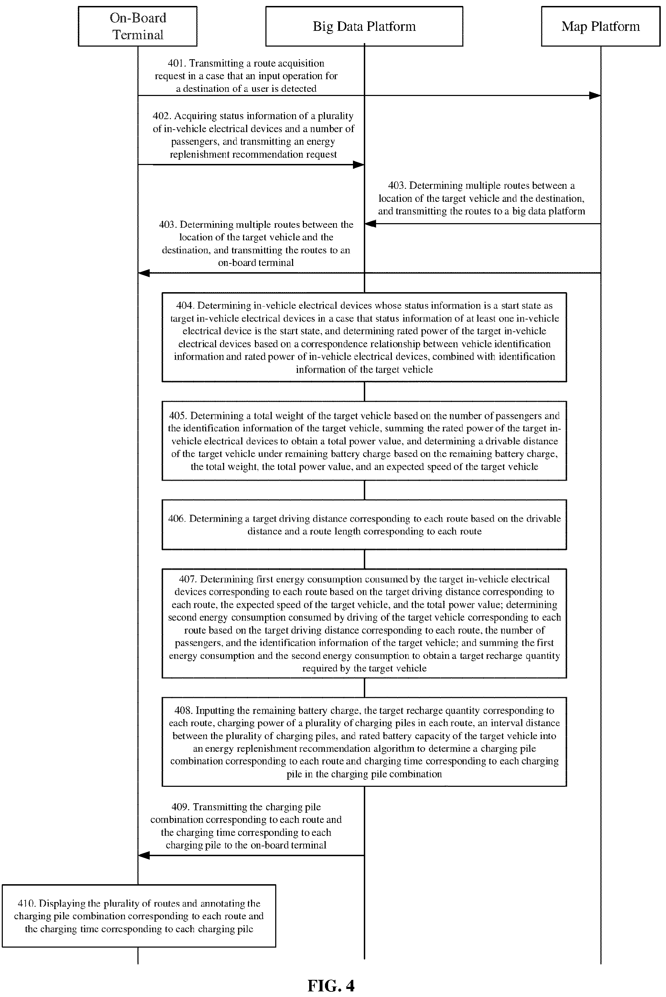

The embodiments of the present disclosure provide a method for determining energy replenishment means for the above application scenarios. The processing flow of this method can be as shown in FIG. 4, including the following processing steps.

In 401, an on-board terminal transmits a route acquisition request to a map platform in a case that an input operation for a destination of a user is detected.

The route acquisition request includes identification information of a target vehicle and identification information of the destination. The identification information of the target vehicle may include the vehicle's license plate number, VIN (Vehicle Identification Number), model, etc. The identification information of the destination may be the name of the destination.

In implementation, when a user needs to drive to a destination, they can input the destination name in a map application. At this point, the on-board terminal detects the user's input operation for the destination name and transmits the route acquisition request to the map platform.

In 402, the on-board terminal acquires status information of a plurality of in-vehicle electrical devices and a number of passengers, and transmits an energy replenishment recommendation request to a big data platform.

The plurality of in-vehicle electrical devices may include air conditioning, audio systems, etc. The status information is a start state or non-start state. The energy replenishment recommendation request may include the identification information of the target vehicle and status information of the plurality of in-vehicle electrical devices.

In implementation, in an energy replenishment recommendation application, the user can select status information for each in-vehicle electrical device according to their usage habits. Additionally, the user needs to input the number of passengers in the on-board terminal.

In other possible implementations, the on-board terminal may detect status information of multiple in-vehicle electrical devices at specified intervals, and detect the number of passengers through pressure sensors under the seats of the target vehicle. When the on-board terminal detects the user's destination input operation, it can add the status information of multiple in-vehicle electrical devices and the number of passengers obtained in the latest cycle to the energy replenishment recommendation request and transmit it to the big data platform.

In 403, the map platform determines multiple routes between the target vehicle's location and the destination, and transmits them to the big data platform and on-board terminal.

In implementation, after receiving the route acquisition request, the map platform can determine the target vehicle's location based on the target vehicle's identification information carried in the request, determine the destination's location based on the destination's identification information in the request, and then plan multiple routes based on these locations, transmitting them to the big data platform and on-board terminal.

In 404, the big data platform determines that status information of at least one in-vehicle electrical device is in the start state, identifies those devices as target in-vehicle electrical devices, and determines their rated power based on a correspondence relationship between vehicle identification information and rated power of in-vehicle electrical devices, and the target vehicle's identification information.

In implementation, after receiving the energy replenishment recommendation request, the big data platform obtains status information of multiple in-vehicle electrical devices. If all devices are in non-start state, subsequent processing may be skipped. If at least one device is in start state, those devices are identified as target in-vehicle electrical devices.

The big data platform may store a correspondence relationship between vehicle identification information and rated power of in-vehicle electrical devices, as shown in Table 1 below. Thus, the big data platform can determine multiple in-vehicle electrical devices and their rated power corresponding to the target vehicle based on the target vehicle's identification information in this correspondence table, and further determine the rated power of the target in-vehicle electrical devices.

**Table 1: Correspondence Between Vehicle Identification Information and Rated Power**

| Identification Information of Vehicles | Identification Information of In-Vehicle Electrical Devices | Rated Power |
|---|---|---|
| Model A Vehicle | Air Conditioning | 3kW |
| | Audio System | 30W |
| | Display Screen | 600W |
| | ... | ... |
| Model B Vehicle | Air Conditioning | 4kW |
| | Audio System | 50W |
| | Display Screen | 500W |
| | ... | ... |
| Model C Vehicle | Air Conditioning | 5kW |
| | Audio System | 60W |
| | Display Screen | 600W |
| | ... | ... |
| ... | ... | ... |

For example, for vehicle identification "Model A Vehicle", Table 1 shows that the air conditioning (target in-vehicle electrical device) has a rated power of 3kW.

In 405, the big data platform determines the total weight of the target vehicle based on the number of passengers and the target vehicle's identification information, sums the rated power of the target in-vehicle electrical devices to obtain a total power value, and determines the drivable distance under remaining battery charge based on the remaining battery charge, total weight, total power value, and expected speed of the target vehicle.

The remaining battery charge and expected speed may be obtained by the big data platform from a telematics platform. The target vehicle may transmit its status parameters (e.g., driving speed, remaining battery charge) to the telematics platform at a specified frequency. The telematics platform can calculate the average speed from received driving speeds and update it periodically. Thus, the big data platform can obtain the target vehicle's average speed from the telematics platform and use it as the expected speed.

In implementation, the big data platform may store a correspondence relationship between vehicle identification information and vehicle curb weight (net weight). Thus, it can determine the target vehicle's curb weight based on its identification information in this correspondence. Further, the big data platform can calculate the total weight using formula (1) below, sum the rated power of target devices using formula (2) to obtain the total power value, and determine the drivable distance using formula (3).

The calculation formulas are as follows:

$$G = (n \times m_1 + m_2) \times g \quad (1)$$

$$P = P_1 + P_2 + \cdots \dots P_n \quad (2)$$

$$S = \frac{W}{G \cdot k + \frac{P}{v}} \quad (3)$$

Where G is the total weight of the target vehicle, n is the number of passengers, $m_1$ is the standard body weight, $m_2$ is the mass of the target vehicle, P is the total power value of the target in-vehicle electrical devices, $P_n$ is the power value of any target in-vehicle electrical device, S is the drivable distance, W is the remaining battery charge, k is the friction coefficient, and v is the expected speed of the target vehicle. It should be noted that the n in formula (1) refers to the number of passengers, while the n in $P_n$ in formula (2) refers to the total number of target in-vehicle electrical devices. Therefore, the n in formula (1) differs from the n in formula (2).

In other possible implementations, the on-board terminal may calculate the weight of each passenger based on pressure detected by pressure sensors under the seats of the target vehicle, and transmit this data to the big data platform. This allows the big data platform to calculate the total weight of the target vehicle based on actual passenger weights, resulting in higher accuracy.

In 406, the big data platform determines the target driving distance for each route based on the drivable distance and the route length corresponding to each route.

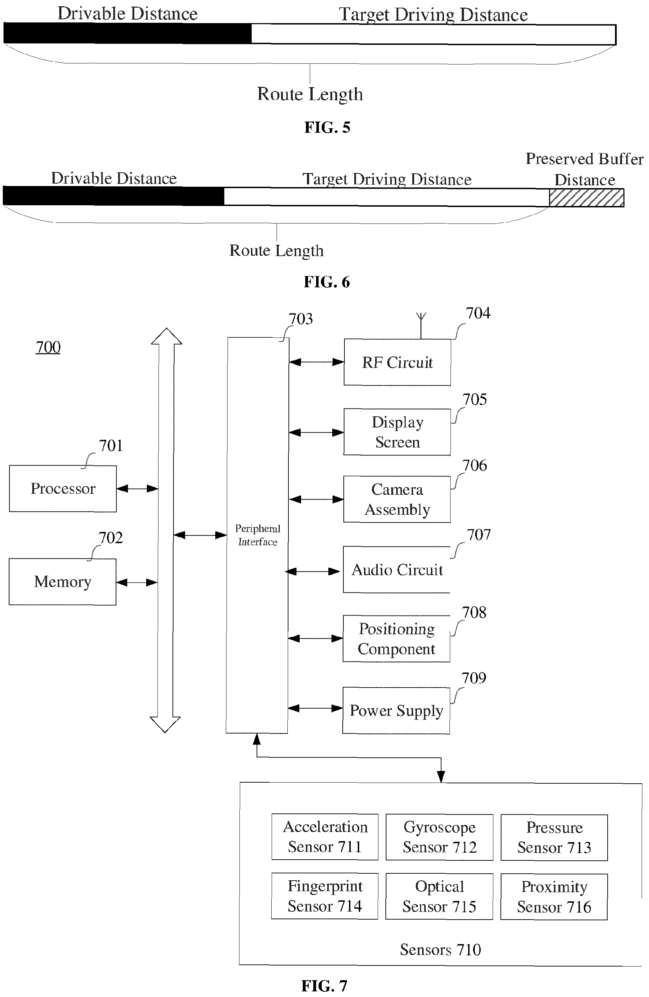

In implementation, after calculating the drivable distance, the big data platform compares it with the length of each route: If all route lengths are less than or equal to the drivable distance (indicating sufficient battery charge to reach the destination without replenishment), subsequent processing may be skipped. If at least one route length exceeds the drivable distance, the big data platform may subtract the drivable distance from each route length to obtain the target driving distance, as shown in FIG. 5. Alternatively, the big data platform may subtract the drivable distance and add a preserved buffer distance (e.g., 10 kilometers) to obtain the target driving distance, as shown in FIG. 6. This preserved buffer distance ensures that the target vehicle maintains a power reserve upon reaching the destination or can still arrive safely during unexpected high power consumption.

In 407, the big data platform determines the first energy consumption by the target in-vehicle electrical devices for each route based on the target driving distance, expected speed of the target vehicle, and total power value. It also determines the second energy consumption by the target vehicle's movement based on the target driving distance, number of passengers, and identification information of the target vehicle. The sum of the first and second energy consumption gives the target recharge quantity required by the target vehicle for each route.

In implementation, the big data platform calculates the first energy consumed by the target in-vehicle electrical devices during travel over the target driving distance using formula (4), calculates the second energy consumed by the target vehicle's movement over the target driving distance using formula (5), and sums these two values to obtain the target recharge quantity. This process calculates the required target recharge quantity for each route.

The calculation formulas are as follows:

$$W_1 = P \cdot \frac{S_1}{v} \qquad (4)$$

$$W_2 = G \cdot k \cdot S_1 \qquad (5)$$

$$W_3 = W_1 + W_2 \qquad (6)$$

Where $W_1$ is the first energy consumption, $S_1$ is the target driving distance, $W_2$ is the second energy consumption, and $W_3$ is the target recharge quantity.

In Step 408, the big data platform inputs the remaining battery charge, the target recharge quantity corresponding to each route, the charging power of a plurality of charging piles in each route, the interval distance between the plurality of charging piles in each route, and the rated battery capacity of the target vehicle into an energy replenishment recommendation algorithm, to determine a charging pile combination corresponding to each route and charging time corresponding to each charging pile in the charging pile combination.

The rated battery capacity is the battery capacity when the target vehicle is fully charged.

The specific steps for determining the charging pile combination corresponding to each route and the charging time corresponding to each charging pile in the charging pile combination are as follows.

In Step I, the big data platform performs permutation and combination on the plurality of charging piles in each route to obtain a plurality of basic charging pile combinations corresponding to each route.

In implementation, for each route, the big data platform can determine all charging piles on that route, and determine the usage status and health status of all charging piles. Then, after excluding charging piles whose usage status is in-use or whose health status is unhealthy, the big data platform performs permutation and combination on the remaining charging piles. For example, there are 6 charging piles on one route, namely charging pile A, charging pile B, charging pile C, charging pile D, charging pile E and charging pile F, wherein the usage status of charging pile F is in-use; after excluding it, permutation and combination on the remaining 5 charging piles can yield the following multiple basic charging pile combinations: (A), (B), (C)...(A,B), (A,C)...(A,B,C)...(A,B,C,D)...(A,B,C,D,E).

In Step II, the big data platform determines the charging time corresponding to each charging pile in each basic charging pile combination based on the charging power of the charging piles in each basic charging pile combination and the target recharge quantity corresponding to each route.

In implementation, for each basic charging pile combination, the big data platform can determine multiple sets of numerical solutions for the charging time of each charging pile based on the formula $W_3 = P_1 t_1 + P_2 t_2 + ... + P_n t_n$; further, the big data platform can randomly select one numerical solution from these multiple sets of numerical solutions as the charging time combination of this basic charging pile combination, that is, determine the charging time corresponding to each charging pile in this basic charging pile combination. Here, n represents the index number of the charging pile, $P_n$ represents the charging power of the charging pile, and $t_n$ represents the charging time of the charging pile.

In Step III, the big data platform filters the plurality of basic charging pile combinations corresponding to each route based on the remaining battery charge, the charging power of the charging piles in each basic charging pile combination, the charging time corresponding to each charging pile in each basic charging pile combination, the interval distance between the plurality of charging piles in each basic charging pile combination, and the rated battery capacity of the target vehicle, to obtain feasible charging pile combinations corresponding to each route.

In implementation, for each basic charging pile combination, the big data platform can calculate the product of the charging power and charging time of each charging pile, and use this product as the charging quantity of the charging pile. Then, the big data platform can determine the distance between every two charging piles, and further calculate the energy required from one charging pile to another charging pile according to formulas (4)-(6), and determine this energy as the consumption energy corresponding to the charging pile located later among the two charging piles.

During filtering, processing can be performed according to the remaining battery charge and the charging quantity and consumption energy of each charging pile:

First, for the first charging pile in each basic charging pile combination, the big data platform can first determine the distance from the target vehicle to the first charging pile, and obtain the energy required from the target vehicle to the first charging pile based on the aforementioned formulas (4)-(6), and determine this energy as the consumption energy corresponding to the first charging pile. Further, the big data platform determines whether the remaining battery charge is greater than or equal to the consumption energy corresponding to the first charging pile. If not, the big data platform can exclude this basic charging pile combination. If yes, the big data platform performs screening according to the second rule.

Second, for the m-th charging pile in each basic charging pile combination (m is a positive integer greater than 1), the big data platform can sum the charging quantities of the first m charging piles, add the remaining battery charge, and then subtract the sum of the consumption energies of the first m charging piles, to obtain the battery charge of the target vehicle at the m-th charging pile. Further, the big data platform determines whether this battery charge is greater than the rated battery capacity of the target vehicle. If yes, the big data platform can exclude this basic charging pile combination. If not, when m equals the number of charging piles in this basic charging pile combination, the big data platform determines this basic charging pile combination as a feasible charging pile combination corresponding to the respective route.

In Step IV, the big data platform determines the charging pile combination with the shortest charging time among the feasible charging pile combinations corresponding to each route as the charging pile combination corresponding to each route.

In implementation, through the above processing, the big data platform can determine multiple feasible charging pile combinations corresponding to each route. The big data platform can sum the charging times of the charging piles in each feasible charging pile combination to obtain the charging time corresponding to each feasible charging pile combination. Further, the big data platform sorts the feasible charging pile combinations in ascending order of charging time, and determines the feasible charging pile combination ranked first as the charging pile combination corresponding to the respective route. Thus, the big data platform can determine the charging pile combination corresponding to each route.

In other possible implementations, the energy replenishment recommendation algorithm can be a machine learning algorithm.

In 409, the big data platform transmits the charging pile combination corresponding to each route and the charging time corresponding to each charging pile in the charging pile combination to the on-board terminal.

In 410, the on-board terminal displays the multiple routes, and annotates the charging pile combination corresponding to each route and the charging time corresponding to each charging pile in the charging pile combination.

In implementation, when receiving the multiple routes transmitted by the map platform, the on-board terminal displays the multiple routes; when receiving the charging pile combination corresponding to each route and the charging time corresponding to each charging pile in the charging pile combination, the on-board terminal annotates the charging piles in the determined charging pile combination and the corresponding charging times on the respective routes. The specific annotation manner can be: highlighting the charging piles in the charging pile combination, for example, enlarging the icons of the charging piles in the charging pile combination, marking special symbols, etc. Meanwhile, the on-board terminal can also display the identification numbers of the charging pile combination and the charging time corresponding to each charging pile in the lower right corner of the relevant display interface.

Since some new energy vehicles support battery swap function, energy replenishment through battery swapping is more convenient than charging. Therefore, the embodiments of the present disclosure also provide a method for determining battery swap stations, and the specific processing steps may be as follows:

In Step I, the big data platform determines whether the target vehicle supports battery swap function based on the identification information of the target vehicle. If the target vehicle supports battery swap function, then based on the number of passengers and the identification information of the target vehicle, the big data platform determines the total weight of the target vehicle, sums the rated power of target in-vehicle electrical devices whose status information is start state to obtain the total power value of target in-vehicle electrical devices whose status information is start state, and based on the remaining battery charge, the total weight, the total power value, and the expected speed of the target vehicle, determines the drivable distance of the target vehicle under the remaining battery charge.

In implementation, the big data platform may store a correspondence relationship between vehicle identification information and energy replenishment methods. Thus, the big data platform can obtain the identification information of the target vehicle from the energy replenishment recommendation request, and based on the identification information of the target vehicle, determine whether the target vehicle supports battery swap function in the correspondence relationship between vehicle identification information and energy replenishment methods. If yes, the big data platform can calculate the drivable distance of the target vehicle under the remaining battery charge, where the specific calculation method may be the same as Step 405 and will not be repeated here. If not, the processing of Step 406 may be performed after determining the drivable distance.

In Step II, the big data platform transmits multiple battery swap stations within the drivable distance in each route to the on-board terminal.

In implementation, the big data platform determines all battery swap stations within the drivable distance in the multiple routes provided by the map platform, and transmits them to the on-board terminal.

In Step III, the on-board terminal displays the multiple routes, and annotates the multiple battery swap stations within the drivable distance in each route.

In implementation, after receiving the multiple routes, the on-board terminal displays the multiple routes; after receiving the multiple battery swap stations within the drivable distance in each route, the on-board terminal annotates the battery swap stations. The specific annotation method may include highlighting the multiple battery swap stations within the drivable distance, for example, enlarging the icons of the multiple battery swap stations within the drivable distance, marking special symbols, etc.

Through the method provided by the embodiments of the present disclosure, the on-board terminal can transmit the status information of multiple in-vehicle electrical devices and the number of passengers to the big data platform. The big data platform calculates the charging quantity required for the target vehicle to reach the destination (i.e., the target recharge quantity) based on this information. Furthermore, based on the remaining battery charge and the charging quantity, the big data platform determines multiple energy replenishment methods and annotates the corresponding charging pile combinations and charging times. Thus, through the method of automatically determining energy replenishment methods, users can understand the energy replenishment methods under different routes without planning by themselves. Moreover, users can replenish the vehicle according to the selected route and the corresponding energy replenishment method to reach the destination, which is relatively convenient.

FIG. 7 shows a structural block diagram of an electronic device 700 provided by an embodiment of the present disclosure. The electronic device may be various terminals in the above embodiments. The electronic device 700 may be a portable mobile terminal, such as: smartphone, tablet computer, MP3 player (Moving Picture Experts Group Audio Layer III), MP4 (Moving Picture Experts Group Audio Layer IV) player, laptop computer or desktop computer. The electronic device 700 may also be called user equipment, portable terminal, laptop terminal, desktop terminal, or other names.

Generally, the electronic device 700 includes: a processor 701 and a memory 702.

The processor 701 may include one or more processing cores, such as 4-core processor, 8-core processor, etc. The processor 701 may be implemented using at least one hardware form of DSP (Digital Signal Processing), FPGA (Field-Programmable Gate Array), PLA (Programmable Logic Array). The processor 701 may also include main processor and co-processor, where the main processor is a processor for processing data in awake state, also called CPU; the co-processor is a low-power processor for processing data in standby state. In some embodiments, the processor 701 may integrate GPU (Graphics Processing Unit), which is responsible for rendering and drawing content to be displayed on the display screen. In some embodiments, the processor 701 may also include AI (Artificial Intelligence) processor, which is used to process computing operations related to machine learning.

The memory 702 may include one or more computer-readable storage media, which may be non-transitory. The memory 702 may also include high-speed random access memory, and non-volatile memory, such as one or more magnetic disk storage devices, flash memory storage devices. In some embodiments, the non-transitory computer-readable storage medium in the memory 702 is used to store at least one instruction, which is executed by the processor 701 to implement the method provided by the embodiments of the present disclosure.

In some embodiments, the electronic device 700 may optionally include a peripheral interface 703 and at least one peripheral device. The processor 701, memory 702, and peripheral interface 703 may be connected via a bus or signal lines. Each peripheral device may be connected to the peripheral interface 703 through a bus, signal line, or circuit board. Specifically, peripherals include at least one of: radio frequency (RF) circuit 704, display screen 705, camera assembly 706, audio circuit 707, positioning component 708, and power supply 709.

The peripheral interface 703 may be used to connect at least one I/O (input/output) related peripheral device to the processor 701 and memory 702. In some embodiments, the processor 701, memory 702, and peripheral interface 703 are integrated on the same chip or circuit board; in other embodiments, any one or two of the processor 701, memory 702, and peripheral interface 703 may be implemented on separate chips or circuit boards, which is not limited in this embodiment.

The RF circuit 704 is used for receiving and transmitting RF (radio frequency) signals, also called electromagnetic signals. The RF circuit 704 communicates with communication networks and other communication devices through electromagnetic signals. The RF circuit 704 converts electrical signals into electromagnetic signals for transmission, or converts received electromagnetic signals into electrical signals. Optionally, the RF circuit 704 includes: an antenna system, RF transceiver, one or more amplifiers, tuners, oscillators, digital signal processor, codec chipset, subscriber identity module card, etc. The RF circuit 704 can communicate with other terminals through at least one wireless communication protocol. The wireless communication protocol includes but is not limited to: World Wide Web, metropolitan area network, intranet, various generations of mobile communication networks (2G, 3G, 4G, and 5G), wireless local area network and/or WiFi (wireless fidelity) network. In some embodiments, the RF circuit 704 may also include NFC (near field communication) related circuits, which is not limited in this disclosure.

The display screen 705 is used to display UI (user interface). The UI may include graphics, text, icons, videos, and any combination thereof. When the display screen 705 is a touch screen, it also has the ability to collect touch signals on or above its surface. These touch signals can be input to the processor 701 as control signals for processing. In this case, the display screen 705 can also provide virtual buttons and/or virtual keyboards, also called soft buttons and/or soft keyboards. In some embodiments, there may be one display screen 705 located on the front panel of electronic device 700; in other embodiments, there may be at least two display screens located on different surfaces of electronic device 700 or in a foldable design; in other embodiments, the display screen 705 may be a flexible display located on curved or foldable surfaces of electronic device 700. Furthermore, the display screen 705 may be configured in non-rectangular irregular shapes, also known as free-form displays. The display screen 705 may be made of LCD (liquid crystal display), OLED (organic light-emitting diode) or other materials.

The camera assembly 706 is used to capture images or videos. Optionally, the camera assembly 706 includes a front camera and a rear camera. Typically, the front camera is located on the front panel of the device, while the rear camera is on the back. In some embodiments, there are at least two rear cameras, which may include any of: main camera, depth camera, wide-angle camera, and telephoto camera, enabling functions such as bokeh effects through fusion of main and depth cameras, panoramic shooting through fusion of main and wide-angle cameras, VR (virtual reality) shooting, or other fused shooting functions. In some embodiments, the camera assembly 706 may also include a flash, which may be a single-color-temperature flash or dual-color-temperature flash (combining warm and cool light flashes for light compensation in different color temperatures).

The audio circuit 707 may include a microphone and speakers. The microphone collects sound waves from users and the environment, converting them into electrical signals for the processor 701 or RF circuit 704 for voice communication. Multiple microphones may be placed at different positions on electronic device 700 for stereo capture or noise reduction, including array microphones or omnidirectional microphones. Speakers convert electrical signals from processor 701 or RF circuit 704 into sound waves, which may be traditional film speakers or piezoelectric ceramic speakers. Piezoelectric ceramic speakers can convert electrical signals into both audible sound waves and inaudible sound waves for applications like distance measurement. In some embodiments, audio circuit 707 may also include a headphone jack.

The positioning component 708 is used to determine the current geographic location of electronic device 700 for navigation or LBS (location based service). The positioning component 708 may be based on GPS (global positioning system) or BeiDou Navigation System.

The power supply 709 is used to supply power to various components in the electronic device 700. The power supply 709 can be alternating current, direct current, disposable batteries, or rechargeable batteries. When the power supply 709 includes rechargeable batteries, the rechargeable batteries can be wired charging batteries or wireless charging batteries. A wired charging battery is a battery charged through a wired line, and a wireless charging battery is a battery charged through a wireless coil. The rechargeable battery can also be used to support fast-charging technology.

In some embodiments, the electronic device 700 further includes one or more sensors 710. The one or more sensors 710 include, but are not limited to: an acceleration sensor 711, a gyroscope sensor 712, a pressure sensor 713, a fingerprint sensor 714, an optical sensor 715, and a proximity sensor 716.

The acceleration sensor 711 can detect the magnitude of acceleration on the three coordinate axes of a coordinate system established by the electronic device 700. For example, the acceleration sensor 711 can be used to detect components of gravitational acceleration on the three axes. The processor 701 can control the display screen 705 to display the user interface in a landscape view or a portrait view based on gravitational acceleration signals collected by the acceleration sensor 711. The acceleration sensor 711 can also be used for games or collecting user motion data.

The gyroscope sensor 712 can detect the orientation and rotation angle of the electronic device 700. The gyroscope sensor 712 can cooperate with the acceleration sensor 711 to collect 3D actions of the user on the electronic device 700. Based on data collected by the gyroscope sensor 712, the processor 701 can achieve the following functions: motion sensing (for example, changing the UI based on the user's tilt operation), image stabilization during shooting, game control, and inertial navigation.

The pressure sensor 713 can be disposed on the side bezel of the electronic device 700 and/or a lower layer of the display screen 705. When the pressure sensor 713 is disposed on the side bezel of the electronic device 700, it can detect a grip signal from the user on the electronic device 700, and the processor 701 performs left/right hand recognition or a shortcut operation based on the grip signal collected by the pressure sensor 713. When the pressure sensor 713 is disposed on the lower layer of the display screen 705, the processor 701 controls operable controls on the UI interface based on a pressure operation of the user on the display screen 705. The operable controls include at least one of a button control, a scroll bar control, an icon control, and a menu control.

The fingerprint sensor 714 is used to collect a user's fingerprint. The processor 701 identifies the user's identity based on the fingerprint collected by the fingerprint sensor 714, or the fingerprint sensor 714 identifies the user's identity based on the collected fingerprint. When the user's identity is recognized as a trusted identity, the processor 701 authorizes the user to perform related sensitive operations. The sensitive operations include unlocking the screen, viewing encrypted information, downloading software, payment, and changing settings. The fingerprint sensor 714 can be disposed on the front, back, or side of the electronic device 700. When a physical button or a manufacturer logo is provided on the electronic device 700, the fingerprint sensor 714 can be integrated with the physical button or the manufacturer logo.

The optical sensor 715 is used to collect ambient light intensity. In one embodiment, the processor 701 can control the display brightness of the display screen 705 based on the ambient light intensity collected by the optical sensor 715. Specifically, when the ambient light intensity is high, the display brightness of the display screen 705 is increased; when the ambient light intensity is low, the display brightness of the display screen 705 is decreased. In another embodiment, the processor 701 can also dynamically adjust shooting parameters of the camera assembly 706 based on the ambient light intensity collected by the optical sensor 715.

The proximity sensor 716, also called a distance sensor, is usually disposed on a front panel of the electronic device 700. The proximity sensor 716 is used to collect a distance between the user and the front of the electronic device 700. In one embodiment, when the proximity sensor 716 detects that the distance between the user and the front of the electronic device 700 gradually decreases, the processor 701 controls the display screen 705 to switch from an on state to an off state; when the proximity sensor 716 detects that the distance between the user and the front of the electronic device 700 gradually increases, the processor 701 controls the display screen 705 to switch from an off state to an on state.

Those skilled in the art can understand that the structure shown in FIG. 7 does not constitute a limitation to the electronic device 700, and may include more or fewer components than shown, or combine some components, or adopt different component arrangements.

In the embodiments of this disclosure, a computer-readable storage medium is also provided, for example, a memory including instructions. The aforementioned instructions can be executed by a processor in a terminal to complete the method for performing interactive operations in the foregoing embodiments. The computer-readable storage medium can be non-transitory. For example, the computer-readable storage medium can be ROM (read-only memory), RAM (random access memory), CD-ROM, magnetic tape, floppy disk, optical data storage device, etc.

It should be noted that the information involved in this disclosure (including but not limited to user equipment information, user personal information, etc.), data (including but not limited to data used for analysis, stored data, displayed data, etc.), and signals (including but not limited to signals transmitted between user terminals and other devices, etc.) are all authorized by the user or fully authorized by all parties, and the collection, use, and processing of relevant data need to comply with relevant laws, regulations, and standards of relevant countries and regions.

Those of ordinary skill in the art can understand that all or part of the steps for implementing the above embodiments can be completed by hardware, or can be instructed by a program to complete related hardware. The program can be stored in a computer-readable storage medium. The storage medium mentioned above can be read-only memory, magnetic disks, optical discs, etc.

The above descriptions are only some possible embodiments of this disclosure and are not intended to limit this disclosure. Any modification, equivalent replacement, improvement, etc. made within the spirit and principles of this disclosure shall be included within the protection scope of this disclosure.

**Claims**

1.  A method for determining energy replenishment means, comprising:

    transmitting, by an on-board terminal, a route acquisition request to a map platform in a case that an input operation for a destination of a user is detected, wherein the route acquisition request comprises identification information of a target vehicle;

    acquiring, by the on-board terminal, status information of a plurality of in-vehicle electrical devices and a number of passengers, and transmitting an energy replenishment recommendation request to a big data platform, wherein the status information is a start state or a non-start state, and the energy replenishment recommendation request comprises the identification information of the target vehicle and the status information of the plurality of in-vehicle electrical devices;

    determining, by the map platform, a plurality of routes between a location of the target vehicle and the destination, and transmitting, by the map platform, the plurality of routes to the big data platform and the on-board terminal;

    determining, by the big data platform, in-vehicle electrical devices whose status information is the start state as target in-vehicle electrical devices in a case that status information of at least one in-vehicle electrical device among the status information of the plurality of in-vehicle electrical devices is the start state, and determining, by the big data platform, rated power of the target in-vehicle electrical devices based on the identification information of the target vehicle and a correspondence relationship between vehicle identification information and rated power of in-vehicle electrical devices;

    determining, by the big data platform, a total weight of the target vehicle based on the number of passengers and the identification information of the target vehicle, summing, by the big data platform, the rated power of the target in-vehicle electrical devices to obtain a total power value, and determining, by the big data platform, a drivable distance of the target vehicle under remaining battery charge based on the remaining battery charge, the total weight, the total power value, and an expected speed of the target vehicle, wherein the remaining battery charge and the expected speed of the target vehicle are acquired by the big data platform from a telematics platform;

    determining, by the big data platform, a target driving distance corresponding to each route based on the drivable distance and a route length corresponding to each route;

    determining, by the big data platform, first energy consumption consumed by the target in-vehicle electrical devices corresponding to each route based on the target driving distance corresponding to each route, the expected speed of the target vehicle, and the total power value, determining, by the big data platform, second energy consumption consumed by driving of the target vehicle corresponding to each route based on the target driving distance corresponding to each route, the number of passengers, and the identification information of the target vehicle, and summing, by the big data platform, the first energy consumption and the second energy consumption to obtain a target recharge quantity required by the target vehicle corresponding to each route;

    inputting, by the big data platform, the remaining battery charge, the target recharge quantity corresponding to each route, charging power of a plurality of charging piles in each route, an interval distance between the plurality of charging piles in each route, and rated battery capacity of the target vehicle into an energy replenishment recommendation algorithm, to determine a charging pile combination corresponding to each route and charging time corresponding to each charging pile in the charging pile combination, wherein the rated battery capacity is battery capacity when the target vehicle is fully charged;

    transmitting, by the big data platform, the charging pile combination corresponding to each route and the charging time corresponding to each charging pile in the charging pile combination to the on-board terminal; and

    displaying, by the on-board terminal, the plurality of routes, and annotating the charging pile combination corresponding to each route and the charging time corresponding to each charging pile in the charging pile combination.

2.  The method according to claim 1, wherein said acquiring, by the on-board terminal, status information of a plurality of in-vehicle electrical devices and a number of passengers comprises:
    acquiring, by the on-board terminal, the status information of the plurality of in-vehicle electrical devices and the number of passengers input by the user.

3.  The method according to claim 1, wherein said acquiring, by the on-board terminal, status information of a plurality of in-vehicle electrical devices comprises:
    detecting, by the on-board terminal, the status information of the plurality of in-vehicle electrical devices according to a designated period.

4.  The method according to claim 1, wherein said determining, by the big data platform, a total weight of the target vehicle based on the number of passengers and the identification information of the target vehicle, summing, by the big data platform, the rated power of the target in-vehicle electrical devices to obtain a total power value, and determining, by the big data platform, a drivable distance of the target vehicle under remaining battery charge based on the remaining battery charge, the total weight, the total power value, and an expected speed of the target vehicle comprises:

determining the drivable distance based on following formulas:

$$G = (n \times m_1 + m_2) \times g \quad (1)$$

$$P = P_1 + P_2 + \cdots \ldots P_n \quad (2)$$

$$S = \frac{W}{G \cdot k + \dfrac{P}{v}} \quad (3)$$

where G is the total weight of the target vehicle, n is the number of passengers, $m_1$ is a standard body weight, $m_2$ is a mass of the target vehicle, P is the total power value of the target in-vehicle electrical devices, $P_n$ is a power value of any target in-vehicle electrical device, S is the drivable distance, W is the remaining battery charge, k is a friction coefficient, and v is the expected speed of the target vehicle.

5. The method according to claim 1, wherein said determining, by the big data platform, a target driving distance corresponding to each route based on the drivable distance and a route length corresponding to each route comprises:
determining the target driving distance corresponding to each route by subtracting the drivable distance from the route length corresponding to each route and adding a preserved buffer distance.

6. The method according to claim 1, wherein said determining, by the big data platform, first energy consumption consumed by the target in-vehicle electrical devices corresponding to each route based on the target driving distance corresponding to each route, the expected speed of the target vehicle, and the total power value, determining, by the big data platform, second energy consumption consumed by driving of the target vehicle corresponding to each route based on the target driving distance corresponding to each route, the number of passengers, and the identification information of the target vehicle, and summing, by the big data platform, the first energy consumption and the second energy consumption to obtain a target recharge quantity required by the target vehicle corresponding to each route comprises:

determining the target recharge quantity required by the target vehicle corresponding to each route based on following formulas:

$$W_1 = P \cdot \frac{S_1}{v} \quad (4)$$

$$W_2 = G \cdot k \cdot S_1 \quad (5)$$

$$W_3 = W_1 + W_2 \quad (6)$$

where $W_1$ is the first energy consumption, P is the total power value of the target in-vehicle electrical devices, $S_1$ is the target driving distance, v is the expected speed of the target vehicle, $W_2$ is the second energy consumption, G is the total weight of the target vehicle, k is a friction coefficient, and $W_3$ is the target recharge quantity.

7. The method according to claim 1, wherein said inputting, by the big data platform, the remaining battery charge, the target recharge quantity corresponding to each route, charging power of a plurality of charging piles in each route, an interval distance between the plurality of charging piles in each route, and rated battery capacity of the target vehicle into an energy replenishment recommendation algorithm, to determine a charging pile combination corresponding to each route and charging time corresponding to each charging pile in the charging pile combination comprises:

performing permutation and combination on the plurality of charging piles in each route to obtain a plurality of basic charging pile combinations corresponding to each route;

determining charging time corresponding to each charging pile in each basic charging pile combination based on charging power of charging piles in each basic charging pile combination and the target recharge quantity corresponding to each route;

filtering the plurality of basic charging pile combinations corresponding to each route based on the remaining battery charge, the charging power of charging piles in each basic charging pile combination, the charging time corresponding to each charging pile in each basic charging pile combination, the interval distance between the plurality of charging piles in each basic charging pile combination, and the rated battery capacity of the target vehicle, to obtain feasible charging pile combinations corresponding to each route; and

determining a charging pile combination with shortest charging time among the feasible charging pile combinations corresponding to each route as the charging pile combination corresponding to each route.

8. The method according to claim 1, further comprising:

determining, by the big data platform, whether the target vehicle supports a battery swap function based on the identification information of the target vehicle, and in a case that the target vehicle supports the battery swap function: determining, by the big data platform, the total weight of the target vehicle based on the number of passengers and the identification information of the target vehicle, summing by the big data platform, the rated power of the target in-vehicle electrical devices to obtain the total power value of target in-vehicle electrical devices whose status information is the start state, and determining, by the big data platform, the drivable distance of the target vehicle under the remaining battery charge based on the remaining battery charge, the total weight, the total power value, and the expected speed of the target vehicle;

transmitting, by the big data platform, a plurality of battery swap stations within the drivable distance in each route to the on-board terminal; and

displaying, by the on-board terminal, the plurality of routes, and annotating, by the on-board terminal, the plurality of battery swap stations within the drivable distance in each route.

9. A computer device, wherein the computer device comprises a memory and a processor;

the memory is configured to store computer instructions; and

the processor is configured to execute the computer instructions stored in the memory, to cause the computer device to perform the method according to any one of claims 1-8.

10. A computer-readable storage medium, wherein the computer-readable storage medium stores computer program code; and

in response to the computer program code being executed by a computer device, the computer device performs the method according to any one of claims 1-8.

Energy Replenishment Recommendation System

Big Data Platform

Map Platform

Telematics Platform

On-Board Terminal

**FIG. 1**

Terminal

Processor 210

Memory 220

Display Component 230

Communication Component 240

**FIG. 2**

**FIG. 3**

| On-Board Terminal | Big Data Platform | Map Platform |
|---|---|---|

401. Transmitting a route acquisition request in a case that an input operation for a destination of a user is detected

402. Acquiring status information of a plurality of in-vehicle electrical devices and a number of passengers, and transmitting an energy replenishment recommendation request

403. Determining multiple routes between a location of the target vehicle and the destination, and transmitting the routes to a big data platform

403. Determining multiple routes between the location of the target vehicle and the destination, and transmitting the routes to an on-board terminal

404. Determining in-vehicle electrical devices whose status information is a start state as target in-vehicle electrical devices in a case that status information of at least one in-vehicle electrical device is the start state, and determining rated power of the target in-vehicle electrical devices based on a correspondence relationship between vehicle identification information and rated power of in-vehicle electrical devices, combined with identification information of the target vehicle

405. Determining a total weight of the target vehicle based on the number of passengers and the identification information of the target vehicle, summing the rated power of the target in-vehicle electrical devices to obtain a total power value, and determining a drivable distance of the target vehicle under remaining battery charge based on the remaining battery charge, the total weight, the total power value, and an expected speed of the target vehicle

406. Determining a target driving distance corresponding to each route based on the drivable distance and a route length corresponding to each route

407. Determining first energy consumption consumed by the target in-vehicle electrical devices corresponding to each route based on the target driving distance corresponding to each route, the expected speed of the target vehicle, and the total power value; determining second energy consumption consumed by driving of the target vehicle corresponding to each route based on the target driving distance corresponding to each route, the number of passengers, and the identification information of the target vehicle; and summing the first energy consumption and the second energy consumption to obtain a target recharge quantity required by the target vehicle

408. Inputting the remaining battery charge, the target recharge quantity corresponding to each route, charging power of a plurality of charging piles in each route, an interval distance between the plurality of charging piles, and rated battery capacity of the target vehicle into an energy replenishment recommendation algorithm to determine a charging pile combination corresponding to each route and charging time corresponding to each charging pile in the charging pile combination

409. Transmitting the charging pile combination corresponding to each route and the charging time corresponding to each charging pile to the on-board terminal

410. Displaying the plurality of routes and annotating the charging pile combination corresponding to each route and the charging time corresponding to each charging pile

**FIG. 4**

Drivable Distance                    Target Driving Distance

Route Length

**FIG. 5**

                                                                    Preserved Buffer
Drivable Distance              Target Driving Distance              Distance

Route Length

**FIG. 6**

700

701

Processor

702

Memory

Peripheral
Interface

703

704

RF Circuit

705

Display
Screen

706

Camera
Assembly

707

Audio Circuit

708

Positioning
Component

709

Power Supply

| Acceleration Sensor 711 | Gyroscope Sensor 712 | Pressure Sensor 713 |
|---|---|---|
| Fingerprint Sensor 714 | Optical Sensor 715 | Proximity Sensor 716 |

Sensors 710

**FIG. 7**

## INTERNATIONAL SEARCH REPORT

| International application No. |
|---|
| **PCT/CN2024/093148** |

| A. | CLASSIFICATION OF SUBJECT MATTER |
|---|---|
| | B60L58/12(2019.01)i; G01C21/34(2006.01)i; B60L3/12(2006.01)i |

According to International Patent Classification (IPC) or to both national classification and IPC

| B. | FIELDS SEARCHED |
|---|---|

Minimum documentation searched (classification system followed by classification symbols)

    IPC: B60L, G01C, G06Q, H04W, G08B

Documentation searched other than minimum documentation to the extent that such documents are included in the fields searched

Electronic data base consulted during the international search (name of data base and, where practicable, search terms used)

CNABS, CNTXT, ENTXTC, VEN, CJFD: 奇瑞汽车, 张效鹏, 王川宿, 李冬, 许佩玲, 导航, 引导, 导引, 路径, 路线, 充电, 换电, 补能, 终点, 目的地, 乘客, 乘员, 人数, 数量, 重量, 车重, 载荷, 负载, 剩余电量, 充电时间, 充电时长, 耗电, 电耗, 消耗, 功率, 空调, 灯, 速度, 车速, 距离, 里程, 路程, 续航, 显示, 输出, charge, electricize, electrification, course, path, route, way, residual, remainder, remanent, residuary, surplus, capacity, power, energy, rapidity, speed, velocity, career, passenger, number, weight, cruise, mileage, endurance, range, distance

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116811589 A (CHERY AUTOMOBILE CO., LTD.) 29 September 2023 (2023-09-29) claims 1-10, description, paragraphs 4-151, and figures 1-7 | 1-10 |
| Y | JP 2012198081 A (MITSUBISHI MOTORS CORP.) 18 October 2012 (2012-10-18) description, paragraphs 5-52, and figures 1-11 | 1-10 |
| Y | CN 113335126 A (EVERGRANDE HENGCHI NEW ENERGY AUTOMOBILE INSTITUTE (SHANGHAI) CO., LTD.) 03 September 2021 (2021-09-03) description, paragraphs 71-185, and figures 1-3 | 1-10 |
| A | CN 111220168 A (ANHUI JIANGHUAI AUTOMOBILE GROUP CO., LTD.) 02 June 2020 (2020-06-02) entire document | 1-10 |
| A | CN 104121921 A (WANG YUJIAO) 29 October 2014 (2014-10-29) entire document | 1-10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 August 2024** | **07 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/093148** |

## C.    DOCUMENTS CONSIDERED TO BE RELEVANT

| Category* | Citation of document, with indication, where appropriate, of the relevant passages | Relevant to claim No. |
| --- | --- | --- |
| A | CN 104864883 A (TSINGHUA UNIVERSITY) 26 August 2015 (2015-08-26)<br>entire document | 1-10 |
| A | US 2011032110 A1 (DENSO CORP.) 10 February 2011 (2011-02-10)<br>entire document | 1-10 |

Form PCT/ISA/210 (second sheet) (July 2022)

**INTERNATIONAL SEARCH REPORT**
Information on patent family members

International application No.

**PCT/CN2024/093148**

| Patent document cited in search report | | | Publication date (day/month/year) | Patent family member(s) | | | Publication date (day/month/year) |
|---|---|---|---|---|---|---|---|
| CN | 116811589 | A | 29 September 2023 | None | | | |
| JP | 2012198081 | A | 18 October 2012 | None | | | |
| CN | 113335126 | A | 03 September 2021 | None | | | |
| CN | 111220168 | A | 02 June 2020 | None | | | |
| CN | 104121921 | A | 29 October 2014 | None | | | |
| CN | 104864883 | A | 26 August 2015 | None | | | |
| US | 2011032110 | A1 | 10 February 2011 | FR | 2948999 | A1 | 11 February 2011 |
| | | | | FR | 2948999 | B1 | 20 December 2013 |
| | | | | DE | 102010039075 | A1 | 10 February 2011 |
| | | | | US | 8698642 | B2 | 15 April 2014 |
| | | | | JP | 2011038845 | A | 24 February 2011 |
| | | | | JP | 5413042 | B2 | 12 February 2014 |

Form PCT/ISA/210 (patent family annex) (July 2022)

**EP 4 659 997 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310771113